# EUROPÄISCHE PATENTSCHRIFT

(11) **EP 2 073 349 B1**
(45) Veröffentlichungstag und Bekanntmachung des Hinweises auf die Patenterteilung: **15.06.2011**
(21) Anmeldenummer: 07076113.5
(22) Anmeldetag: 20.12.2007
(51) Int. Cl.: H02K 1/20

(54) **Elektromotor mit Medienleitung durch den Stator**
Electrical motor with media conduits through the stator
Moteur électrique avec conduites de fluide traversant le stator

(43) Veröffentlichungstag der Anmeldung: 24.06.2009
(73) Patentinhaber: SycoTec GmbH & Co. KG, 88299 Leutkirch im Allgäu (DE)
(72) Erfinder: Bischof, Thomas, 87758 Illerbeuren (DE); Mack, Karl, 88299 Leutkirch (DE)
(74) Vertreter: Golkowsky, Stefan

(56) Entgegenhaltungen:
- EP-A- 0 023 009
- EP-A- 0 064 846
- EP-A- 0 788 779
- FR-A- 2 374 887

## Beschreibung

Die vorliegende Erfindung betrifft Elektromotore zum Antrieb von dentalen Instrumenten.

Aus Dokument DE 19714466 ist ein zahnärztliche Antriebssystem vorbekannt. Zahnärztliche Antriebssysteme umfassen üblicherweise ein dentales Instrument zur Aufnahme eines rotierenden Werkzeugs sowie einen Antriebsmotor, der über eine Schnellkupplung (z.B. eine Kupplung nach DIN ISO 3964) mit dem Instrument gekoppelt werden kann. Der Motor wiederum wird vorzugsweise über eine weitere Schnellkupplung mit einem Versorgungsschlauch verbunden, wobei der Versorgungsschlauch die Stromzufuhr für den Elektromotor sowie Medienzuleitungen für Wasser und Luft enthält. Dies sind also üblicherweise drei einzelne Komponenten, die nach dem Stand der Technik steckbar gekoppelt sind. Der Nachteil dieser üblichen Anordnungen ist jedoch das hohe Gewicht sowie die ungünstige Lage des Schwerpunkts des Elektromotors. Der Bearbeiter (beispielsweise ein Zahnarzt oder ein Zahntechniker) greift das System meist im Bereich des Motors. Aufgrund der oben genannten nachteiligen Situation beim Gewicht bzw. der Schwerpunktlage kommt es zu einer schnelleren Ermüdung des Bedieners.

Es ist daher die Aufgabe der vorliegenden Erfindung, einen Elektromotor zum Antrieb eines dentalen Instruments bereitzustellen, der leichtgewichtig und kleinbauend ist, um somit für einen Zahnarzt bzw. einen Zahntechniker ein erleichtertes Arbeiten auch über längere Zeit zu gewährleisten.

Diese Aufgabe wird durch einen Elektromotor nach Anspruch 1 gelöst.

Erfindungsgemäß ist hierbei ein Elektromotor zum Antrieb des dentalen Instruments, mit einem auf einer Welle gelagerten Rotormagneten, einem Stator sowie Medienleitungen zur Zuführung von Medien zu dem dentalen Instrument hin. Eine Grammesche Statorwicklung ist hierbei vorgesehen, wobei innerhalb dieser Statorwicklung oder zwischen einzelnen Abschnitten dieser Statorwicklung zumindest bereichsweise Medienleitungen verlaufen. Unter "innerhalb dieser Statorwicklung" ist zu verstehen, dass die Medienleitungen radial innerhalb des größten Außendurchmessers der Wicklung und radial außerhalb des kleinsten Innendurchmessers liegen. Bei nicht kreisrunden Formen wird jeweils der kleinste umbeschreibende Kreis für den Durchmesser angenommen.

Unter "dentales Instrument" ist insbesondere ein zahnärztliches, zahnmedizinisches oder dentaltechnisches Hand- und Winkelstück zu verstehen.

Unter "Grammesche Statorwicklung" wird im Kontext dieser Anmeldung verstanden, dass der Stator eine Jochbewicklung bzw. eine Ringwicklung nach Gramme aufweist. Der Vorteil dieser Technologie besteht darin, dass die Leiter im magnetisch aktiven, dem permanentmagnetischen Rotormagneten zugewandten Bereich, sowie im passiven Bereich auf dem Statorrücken im Wesentlichen in axialer Richtung verlaufen. Dadurch wird es erfindungsgemäß möglich, die Medien im Durchmesserbereich der Wicklung innen zwischen Rotor und Statorrückschluss sowie außen im Bereich der Wicklungsrückführung hindurchzuführen. Idealerweise geschieht dies zwischen den oben genannten einzelnen Abschnitten der Statorwicklung.

Mit anderen Worten werden die Wicklungsdrähte bei dieser Wicklung um den vorzugsweise ringförmigen Statorkern herumgewickelt und sind hierbei (zumindest auf der radialen Innenseite sowie radialen Außenseite des Statorkerns) im Wesentlichen parallel zu der Welle. Erfindungsgemäß ist hierbei jedoch auch eine Winkelabweichung möglich.

Mit der erfindungsgemäßen Durchleitung von Medienleitungen durch den Stator hindurch (und hierbei möglicherweise sogar im vom Statorrückschluss umschlossenen Bereich) wird der Stator voll für Mediendurchleitungen bei Elektromotoren zum Antrieb von dentalen Instrumenten nutzbar gemacht.

Dies führt zunächst einmal dazu, dass in radialer Richtung die Ausdehnung des Motors bzw. des Handgeräts, das das dentale Instrument aufnimmt, klein gehalten werden kann.

Ein weiterer großer Vorteil ist, dass aufgrund der erfindungsgemäßen Statorwicklung der Elektromotor (d.h. sowohl der Stator- als auch der Rotormagnet) in Richtung des Rotors/der Rotorwelle sehr kurz gehalten werden können.

Hierdurch wird erfindungsgemäß die Baugröße sowohl in Längsrichtung als auch in radialer Richtung reduziert und es ergeben für den Bediener die Vorteile des ermüdungsfreien Arbeitens.

Vorteilhafte Weiterbildungen werden in den abhängigen Ansprüchen beschrieben.

Der erfindungsgemäße Motor ist vorteilhaft als Permanentmagnet-Synchronmotor bzw. als kollektorloser Gleichstrommotor (BLDC-Motor) ausgeführt. Hierdurch ergibt sich, insbesondere bei den hochdrehenden Anwendungen die im Dentalbereich erforderlich sind, eine relativ verschleißfreie Anordnung.

Die Abschnitte der Statorwicklung stellen vorteilhafterweise jeweils Einzelspulen dar. Hierbei können jeweils diametral gegenüberliegende Einzelspulen miteinander jeweils zu einem Spulenpaar verbunden und zu einer Phase verschaltet sein. Hierdurch ergibt sich zu noch vertretbaren Baukosten ein relativ guter Wirkungsgrad bei einer kompakten Bauweise und einem geringen Verschleiß.

Die Einzelspulen bzw. die einzelnen Abschnitte sind hierbei vorzugsweise mehrschichtig gewickelt. Die Einzelspulen bzw. Abschnitte selbst sind vorzugsweise nicht überlappend angeordnet, um insbesondere auch radialen Bauraum zu sparen.

Der Stator weist vorzugsweise einen Rückschlussring auf, wobei dieser Rückschlussring vorzugsweise von einem Spulenkörper des Stators umschlossen wird. Durch diese mehrteilige modulare Bauform werden Herstellungskosten minimiert und es können Spulenkörper unterschiedlicher Art zum Einsatz kommen, die an die jeweiligen Medienleitungen, d.h. an deren Größe bzw. Verlauf, angepasst sind.

Die Statorwicklung ist hierbei um im Wesentlichen kreisringsegmentförmige Abschnitte des Rückschlussrings bzw. des Spulenkörpers gewickelt. Der Rückschlussring ist wiederum im Sinne eines kostengünstigen und modularen Aufbaus aus mehreren Lagen metallischen Blechs aufgebaut. Vorzugsweise ist die Statorwicklung mit einem Harzmaterial bzw. einem Kunststoffmaterial ausgefüllt bzw. ausgegossen.

Es ist sehr vorteilhaft, dass der erfindungsgemäße Elektromotor trotz seiner kleinbauenden Größe eine in der Praxis übliche Kupplung zur Aufnahme eines anzutreibenden dentalen Instruments aufweist, insbesondere eine Kupplung nach DIN ISO 3964, die somit den Anbau bestehender und kostengünstiger Instrumente erlaubt. Der Elektromotor als solcher kann allerdings auch direkt in ein Instrument bzw. Hand- und Winkelstück eingebaut werden.

Der Rückschlussring des Elektromotors ist vorzugsweise radial außen und/oder radial innen von dem Spulenkörper umschlossen. Hierbei können sich zwischen den Abschnitten der Statorwicklung radiale Erhebungen des Spulenkörpers befinden, um hierin insbesondere geometrisch klare Führungen der Medienleitungen zu erreichen und hierbei auch noch ein akzeptables Temperaturgefälle zu der möglicherweise wärmeren Statorwicklung zu erhalten. Diese Erhebungen können z.B. als Kreisringsegmentabschnitte oder als Quader ausgeführt sein. Die Medienleitungen laufen hierbei vorzugsweise in Längsrichtung der Welle durch den Stator bzw. den Spulenkörper (und dort z.B. durch Bohrungen oder Rillen/Kanäle) hindurch. Insbesondere durch die kurzbauende Anordnung ist hierbei die Erwärmung der Medien (Luft bzw. Wasser) zu vernachlässigen.

Es ist allerdings nicht zwingend einen Spulenkörper vorzusehen.

Die Medienleitungen sind vorzugsweise Medienleitungen zur Durchführung von Wasser, Elektrizität, Luft (insbesondere Druckluft) oder auch Licht.

Das Verhältnis der Größenausdehnung des Stators radial zur Welle zur größten Ausdehnung des Stators in Richtung der Welle (Längsrichtung) beträgt vorzugsweise zwischen 0,8 und 5, besonders vorzugsweise zwischen 1 und 3, in einer ganz besonders vorzugsweisen Ausführung zwischen 1,2 und 1,6.

Mit den oben genannten Ausdehnungen des Stators (in radialer bzw. axialer Richtung) sind hierbei die größten Abmessungen der jeweiligen Wicklungsabschnitte gemeint.

Vorzugsweise liegt das Verhältnis der größten Ausdehnung des Stators radial zur Welle zur größten Länge des Rotormagneten (Länge des Rotormagneten in Richtung der Welle) zwischen 1 und 6, vorzugsweise zwischen 1,1 und 2, besonders vorzugsweise zwischen 1,6 und 1,8.

Hierdurch wird klar, dass der erfindungsgemäße Motor für seine Leistungsklasse ganz besonders kurzbauend hergestellt werden kann. Mit "größter Ausdehnung des Stators radial zur Welle" ist wiederum die größte Ausdehnung der elektrisch wirksamen Teile, vorzugsweise der Statorwicklung, gemeint. Mit "größten Länge des Rotormagneten in Wellenrichtung" ist auch nur der Abschnitt mit tatsächlich permanentmagnetischem Material gemeint, also ohne anschließende (beispielsweise im Betrieb später magnetisierte) Metallabschnitte.

Eine besonders vorteilhafte Bauform sieht vor, dass der Elektromotor kupplungsfrei mit einem Schlauch verbunden ist, wobei der Schlauch an dem dem Elektromotor abgewandten Ende eine Antriebs- und Steuereinheit zur Zuführung und Regelung von Medien aufweist. D.h., dass durch den Schlauch Medienleitungen verlaufen, die kupplungsfrei dann bis zur Kupplung für das dentale Instrument verlaufen und daher auf mindestens eine Kupplung verzichtet werden kann, die üblicherweise zwischen dem Schlauchstück und dem hieran durch eine Kupplung anzuschließenden Motor liegt.

In einer besonders vorzugsweisen Ausführung kann durch den Schlauch auch noch ein Lichtleiter (Medienleitung zur Führung von Licht) verlaufen. Dies ermöglicht es, dass in der Antriebs- und Steuereinheit eine Lichtquelle angeordnet wird und dieses Licht durch den Schlauch und den Motor hindurch dann zum dentalen Instrument hin geführt wird. Hierdurch kann der erfindungsgemäße Schlauchmotor noch kleiner gebaut werden, da beispielsweise keine Lichtquelle im Bereich des Motors angebracht werden muss. Zudem ergibt sich der Vorteil, dass der Bediener nicht durch die von der Lichtquelle bedingte Erwärmung unangenehm beeinflusst wird. Schließlich ist bei dem kupplungsfreien Schlauchmotor besonders vorteilhaft, dass beim Übergang vom Schlauch zum Motor keine Kupplung vorgesehen ist, die im Falle eines Lichtleiters zu einem Helligkeitsverlust durch Streulicht führen würde.

Der erfindungsgemäße Schlauch kann praktisch beliebig lang gestaltet werden, die größte Länge des Schlauchmotors (also Schlauch einschließlich Elektromotor von der Spitze der Kupplung zum dentalen Instrument bis hin zur Mündung des Schlauches in die Antriebs- und Steuereinheit) kann ohne weiteres zwischen 1 m und 3 m betragen.

Weitere vorteilhafte Weiterbildungen der Erfindung werden in den übrigen Ansprüchen angegeben.

Die Erfindung wird nun anhand mehrerer Figuren erläutert. Es zeigen:
- Fig. 1: eine Ansicht eines erfindungsgemäßen E- lektromotors, der links eine Kupplung zum Anstecken eines dentalen Instruments auf- weist,
- Fig. 2: eine teilweise freigeschnittene Ansicht eines erfindungsgemäßen Stators,
- Fign. 3a bis 3c: verschiedene Ansichten eines erfindungs- gemäßen Schlauchmotors,
- Fig. 4: Darstellung eines in das Instrument in- tegrierten Elektromotors, und
- Fig. 5: Darstellung eines dentalen Systems nach dem Stand der Technik.

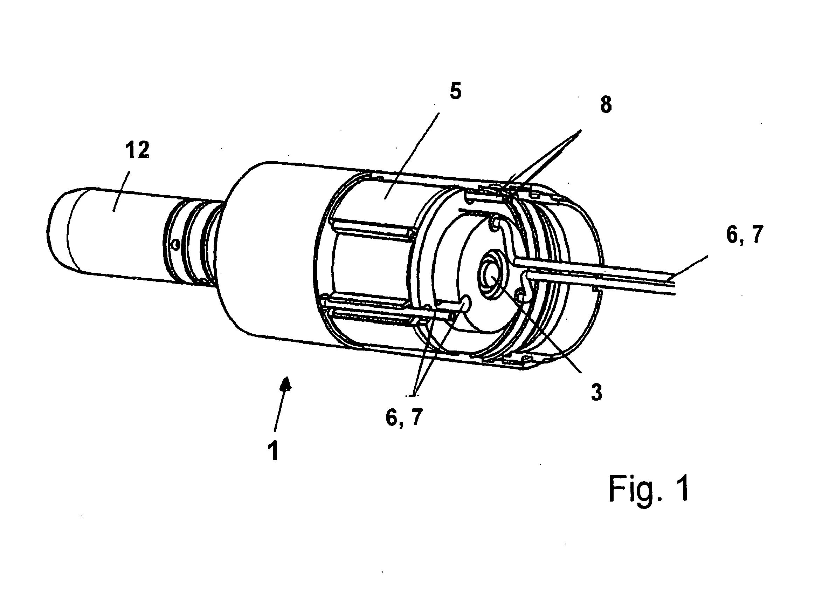

Fig. 1 zeigt einen erfindungsgemäßen Elektromotor 1.

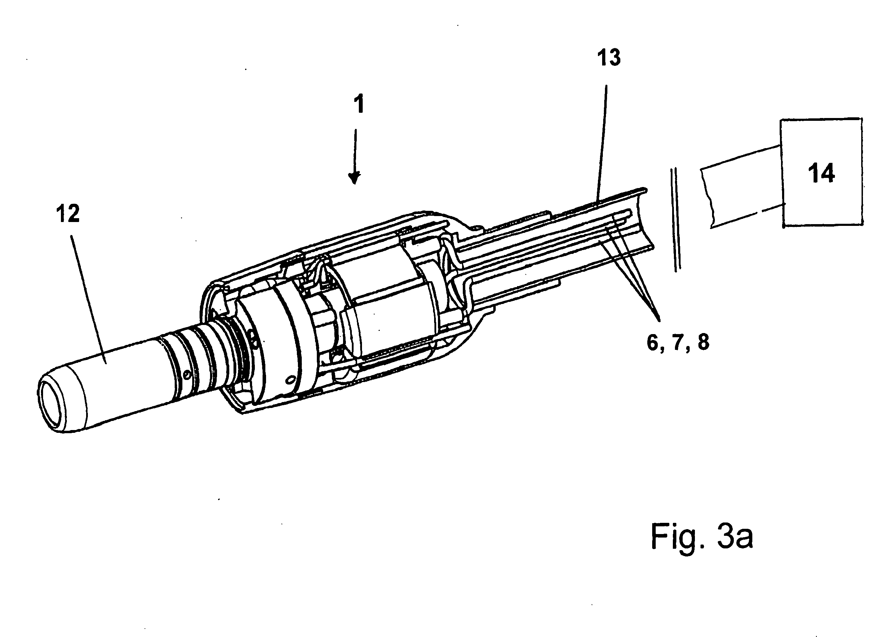

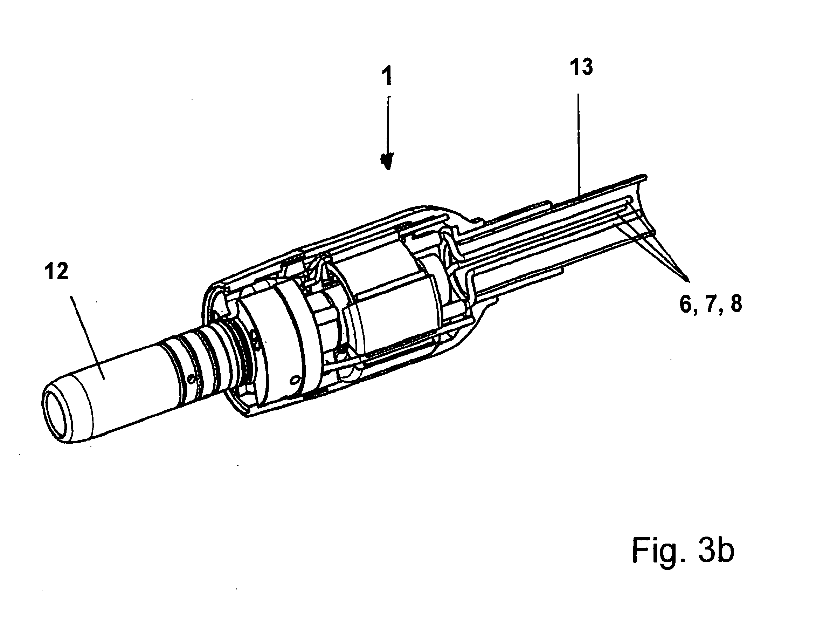

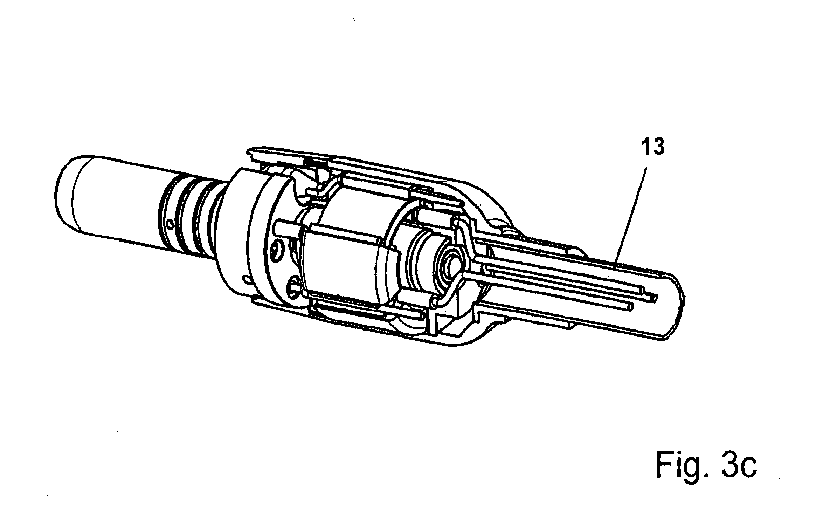

Dieser ist in einem Gehäuse untergebracht, an dem eine Kupplung 12 nach DIN ISO 3964 zum Anschluss dentaler Instrumente angebracht ist. Der Elektromotor 1 selbst weist eine Welle 3 auf, die mit einem Rotormagneten 4 verbunden ist. Konzentrisch hierum angeordnet ist ein Stator 5, Medienleitungen 6 bzw. 7 (für Wasser bzw. Luft) und Licht (Medienleitung 8) laufen durch den Stator hindurch, d.h. sie müssen nicht mehr außerhalb des Stators geführt werden. Die "Medienleitung für Licht" kann entweder ein Lichtleiter (z.B.) Glasfaser) sein, alternativ auch eine Stromzuführung zu einer im Bereich der Kupplung zum dentalen Instrument eingebrachten Leuchte bzw. Leuchtdiode. Mit "durch den Stator" bzw. "innerhalb des Stators" ist hierbei gemeint, dass die Medienleitungen radial innerhalb elektrisch wirksamer Bereiche des Stators verlaufen, vorliegend radial innerhalb der größten Abmessungen der Statorwicklungen. Die Medienleitungen bzw. Stromzuführungen für den erfindungsgemäßen Motor verlaufen durch einen rechts in Fig. 1 nicht mehr dargestellten Schlauch, der entweder mit dem Elektromotor fest verbunden sein kann oder an diesen über eine Kupplung ankuppelbar ist. Die Medienleitungen springen hierbei auf der der Kupplung 12 abgewandten Seite vorzugsweise radial nach innen (s. Fig. 3), um in diesem Bereich einen Schlauch mit kleinem Durchmesser möglichst bald hinter dem Ende des Elektromotors bereitzustellen.

Der Elektromotor 1 ist ein Permanentmagnet-Synchronmotor, vorliegend ein kollektorloser Gleichstrommotor (BLDC-Motor).

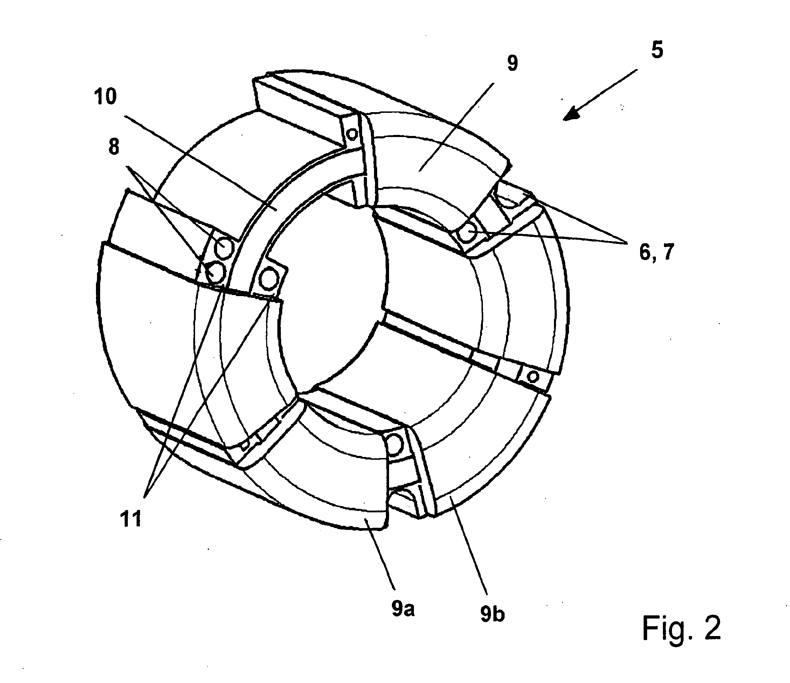

Fig. 2 zeigt einen detaillierten, teilweise freigeschnittenen Aufbau des Stators 5. Dieser Stator weist eine Statorwicklung 9 auf, die nach Gramme gewickelt ist, d.h., dass um den Spulenkörper 11, der radial einen zum Spulenkörper gehörenden Rückschlussring 10 einschließt. Die Wicklungsdrähte umlaufen hierbei den von dem Spulenkörper gebildeten äußeren Ring bzw. ringförmigen Statorkern. In der in Fig. 2 gezeigten Darstellung ist die Wicklung 9 hierbei in mehrere Abschnitte unterteilt, die jeweils Kreisringsegmente darstellen. Diese kreisringsegmentförmige Abschnitte (beispielsweise ein erster Abschnitt 9a oder ein zweiter Abschnitt 9b) sind vorzugsweise als Einzelspulen dargestellt. Die Wicklungsdrähte dieser Einzelspulen sind im Wesentlichen in Verlaufsrichtung der Welle 3 angeordnet (diese verläuft im Wesentlichen fluchtend zur Kupplung 12, siehe Fig. 1). Der Verlauf der Wicklungsdrähte entlang der Welle 3 gilt hierbei natürlich nur für die radiale Innen- bzw. radiale Außenseite, an den Stirnseite verläuft der Wicklungsdraht im Wesentlichen radial nach außen bzw. radial nach innen.

Insgesamt sind sechs Einzelspulen 9a, 9b etc. vorgesehen, wobei die jeweils diametral gegenüberliegenden Einzelspulen miteinander jeweils zu einem Spulenpaar verbunden und zu einer Phase verschaltet sind.

Die Abschnitte 9a, 9b etc. bzw. Einzelspulen sind mehrschichtig gewickelt und überlappen sich auch in ihren Randbereichen nicht. Die entsprechende Statorwicklung ist mit einem Kunstharz bzw. Kunststoff ausgegossen.

Der Stator 5 zeigt den Rückschlussring 10, der radial innen und radial außen von dem Spulenkörper umgeben ist, der Spulenkörper wiederum ist von der entsprechenden Wicklung umgeben.

Der Rückschlussring 10 ist aus mehreren Lagen metallischen Blechs aufgebaut.

Zwischen den einzelnen Abschnitten 9a, 9b etc. der Statorwicklung 9 weist der Spulenkörper radiale Erhebungen auf, die radial nach außen verlaufen bzw. radial nach innen (also zum Rotormagneten hin). In diesen Bereichen ist, ohne eine unnötige Feldbeeinflussung bzw. Wärmebeeinflussung durch den Elektromotor, die Durchführung der Medienleitung 8 für Licht bzw. der Medienleitung 7 für Luft oder auch der Medienleitung 6 für Wasser möglich. Prinzipiell können beliebig viele Medienleitungen durchgeführt werden, möglich sind auch Zuführungen von Stromleitungen, falls das dentale Instrument hier zusätzliche Anschlüsse erfordern sollte. Die Medienleitungen können also innerhalb oder außerhalb eines Rückschlussrings verlaufen. Sie müssen nicht zwingend zwischen einzelnen Abschnitten der Statorwicklung verlaufen sondern können auch durch eine Statorwicklung hindurch verlaufen.

Das Verhältnis der Größenausdehnung des Stators radial zur Welle (größter Durchmesserbereich des Stators in Fig. 2, gemessen als Diagonale von den beiden am weitesten entfernten radialen Punkten in einer zur Welle senkrechten Ebene der Statorwicklung) zur größten Ausdehnung des Stators in Richtung der Welle (also in Längsrichtung der Welle, vorliegend also fluchtend zur Kupplung 12, hier wiederum zwischen den Bereichen der Statorwicklung, die axial am weitesten voneinander entfernt sind) liegt bei 1,4.

Das Verhältnis der größten Ausdehnung des Stators radial zur Welle (hier wiederum das größte Durchmessermaß im Bereich der Statorwicklung) zur größten Länge des Rotormagneten (nur die Länge des eigentlichen Rotormagneten ist beachtlich) liegt bei 1,5.

Fign. 3a bis 3c zeigen verschiedene Ansichten eines erfindungsgemäßen Schlauchmotors. Hierbei ist der in einem Gehäuse angeordnete erfindungsgemäße Elektromotor 1, bei dem das Gehäuse linksseitig die Kupplung 12 nach DIN 3964 aufweist, rechtsseitig direkt mit einem Schlauch 13 verbunden, ohne dass hier noch eine zusätzliche Kupplung gegeben ist. Eine solche Kupplung würde höhere Baukosten, weitere Fehlerquellen sowie höheres Gewicht bedeuten. Die Medienleitungen für Luft, Wasser bzw. Licht 6, 7, 8 laufen hierbei durch den Schlauch 13 bis zu einer Antriebs- und Steuereinheit 14. Der größte Abstand von der Spitze der Kupplung 12 aus gemessen bis zur Mündung des Schlauches 13 in die Antriebs- und Steuereinheit 14 beträgt vorliegend 2,5 m.

Beachtlich ist, dass die Medienleitung 8 zur Durchführung von Licht, die vorzugsweise als Glasfaserleitung (alternativ als Stromzuführung) ausgeführt ist, direkt von der Antriebs- und Steuereinheit zu der Kupplung 12 ohne Unterbrechung verläuft. Eine Lichtquelle, die Licht in diesen Lichtleiter einspeist ist in der Antriebs- und Steuereinheit vorgesehen. Hierdurch entfällt die Notwendigkeit einer zusätzlichen Lichtquelle im Bereich des Elektromotors 1, die zusätzlichen Bauraum benötigen würde bzw. auch eine höhere Wärmeabgabe im Bereich der Bedienerhand bedeuten würde. Insbesondere durch Verzicht auf eine Kupplung zwischen Elektromotor und Schlauch wird außerdem gewährleistet, dass diese Kupplung einen Streulichtverlust erzeugt.

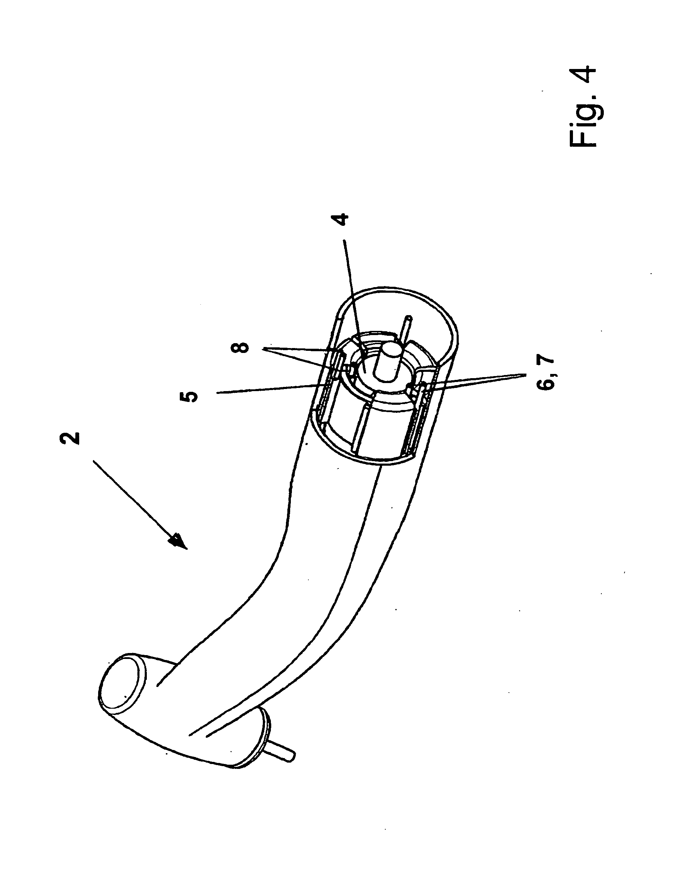

Fig. 4 zeigt ein Beispiel für ein dentales Instrument 2 mit einem integrierten erfindungsgemäßen Elektromotor. Mit "dentalem Instrument" ist im Kontext dieser Anmeldung ein Gerät bezeichnet, das motorbetrieben die Bearbeitung von Gegenständen bzw. Zähnen vorzugsweise durch einen Zahnarzt, einen Zahntechniker oder entsprechendem Personal ermöglicht.

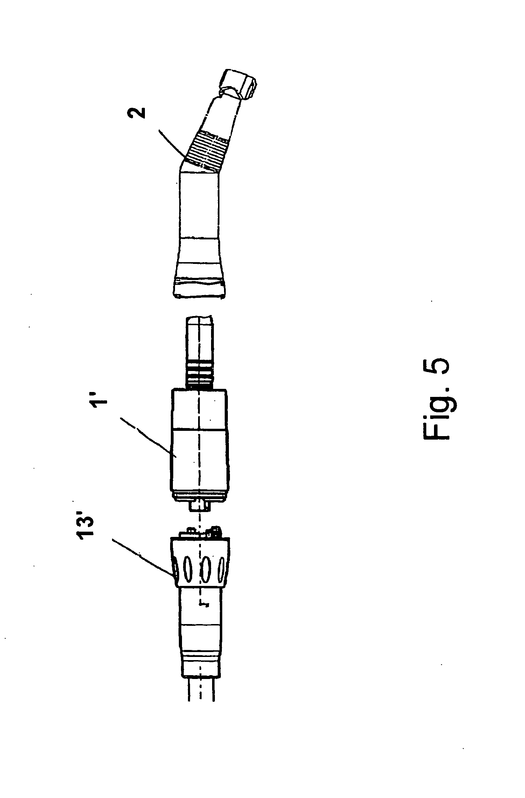

Fig. 5 zeigt den Aufbau eines dentalen Systems nach dem Stand der Technik, bei dem ein dentales Instrument 2 über eine Kupplung nach DIN ISO 3964 mit einem Motor 1' gekoppelt ist, der dann wiederum mit einem Schlauchstück 13' über eine weitere Kupplung verbindbar ist.

## Patentansprüche

1. Elektromotor (1) zum Antrieb eines dentalen bzw. medizinischen Instruments (2), mit einem auf einer Welle (3) gelagerten Rotormagneten (4) sowie einem Stator (5) und Medienleitungen (6, 7, 8) zur Zuführung von Medien zu dem dentalen Instrument,
**dadurch gekennzeichnet ,**
**dass** eine Grammesche Statorwicklung (9) vorgesehen ist, wobei innerhalb der Statorwicklung oder zwischen einzelnen Abschnitten (9a, 9b) der Statorwicklung, zumindest bereichsweise, Medienleitungen (6, 7, 8) verlaufen.

2. Elektromotor nach Anspruch 1, **dadurch gekennzeichnet, dass** der Elektromotor (1) ein Permanentmagnet-Synchronmotor ist.

3. Elektromotor nach einem der vorhergehenden Ansprüche, **dadurch gekennzeichnet, dass** der Elektromotor (1) ein kollektorloser Gleichstrommotor ist.

4. Elektromotor nach einem der vorhergehenden Ansprüche, **dadurch gekennzeichnet, dass** die Abschnitte (9a, 9b) der Statorwicklung (9) jeweils Einzelspulen darstellen.

5. Elektromotor nach Anspruch 4, **dadurch gekennzeichnet, dass** sechs Einzelspulen (9a, 9b) vorgesehen sind, wobei die jeweils diametral gegenüberliegenden Einzelspulen miteinander jeweils zu einem Spulenpaar verbunden und zu einer Phase verschaltet sind.

6. Elektromotor nach einem der Ansprüche 4 oder 5, **dadurch gekennzeichnet, dass** die Einzelspulen mehrschichtig gewickelt sind.

7. Elektromotor nach einem der Ansprüche 4 bis 6, **dadurch gekennzeichnet, dass** die Einzelspulen nicht überlappend angeordnet sind.

8. Elektromotor nach einem der vorhergehenden Ansprüche, **dadurch gekennzeichnet, dass** der Stator (5) einen Rückschlussring (10) enthält und/oder dass dieser Rückschlussring von einem Spulenkörper des Stators umschlossen wird.

9. Elektromotor nach Anspruch 8, **dadurch gekennzeichnet, dass** die Statorwicklung um im Wesentlichen kreisringsegmentförmige Abschnitte des Rückschlussrings (10) und/oder des Spulenkörpers (11) des Stators (5) gewickelt sind.

10. Elektromotor nach einem der Ansprüche 8 oder 9, **dadurch gekennzeichnet, dass** der Rückschlussring (10) aus mehreren Lagen metallischen Blechs aufgebaut ist.

11. Elektromotor nach einem der vorhergehenden Ansprüche, **dadurch gekennzeichnet, dass** die Statorwicklung mit Kunststoff ausgefüllt ist.

12. Elektromotor nach einem der vorhergehenden Ansprüche, **dadurch gekennzeichnet, dass** der Elektromotor (1) eine Kupplung (12) zur Aufnahme eines anzutreibenden dentalen Instruments (2) aufweist.

13. Elektromotor nach einem der Ansprüche 8 bis 12, **dadurch gekennzeichnet, dass** der Rückschlussring (10) nach radial außen und/oder radial innen von dem Spulenkörper (11) umschlossen ist.

14. Elektromotor nach einem der vorhergehenden Ansprüche, **dadurch gekennzeichnet, dass** sich zwischen den Abschnitten(9a, 9b) der Statorwicklung radiale Erhebungen des Spulenkörpers (11) befinden.

15. Elektromotor nach einem der vorhergehenden Ansprüche, **dadurch gekennzeichnet, dass** die Medienleitungen (6, 7, 8) im Wesentlichen in Längsrichtung der Welle (3) durch den Spulenkörper (11) verlaufen.

16. Elektromotor nach einem der vorhergehenden Ansprüche, **dadurch gekennzeichnet, dass** die Medienleitungen (6, 7, 8) Leitungen zur Durchführung von Licht, Wasser, Elektrizität und/oder Luft, insbesondere Druckluft, sind.

17. Elektromotor nach einem der vorhergehenden Ansprüche, **dadurch gekennzeichnet, dass** das Verhältnis der Größenausdehnung des Stators (5) radial zur Welle (3) zur größten Ausdehnung des Stators (5) in Richtung der Welle (3) zwischen 0,8 und 5, vorzugsweise zwischen 1 und 3, besonders vorzugsweise zwischen 1,2 und 1,6 liegt.

18. Elektromotor nach einem der vorhergehenden Ansprüche, **dadurch gekennzeichnet, dass** das Verhältnis der größten Ausdehnung des Stators (5) radial zur Welle (3) zur größten Länge des Rotormagneten (4) in Wellenrichtung zwischen 1 und 6, vorzugsweise zwischen 1,1 und 2, besonders vorzugsweise zwischen 1,6 und 1,8 liegt.

19. Elektromotor nach einem der vorhergehenden Ansprüche, **dadurch gekennzeichnet, dass** dieser kupplungsfrei mit einem Schlauch verbunden ist, wobei der Schlauch an dem dem Elektromotor (1) abgewandten Ende einer Antriebs- und Steuereinheit (14) zur Zuführung und Regelung von Medien aufweist.

20. Elektromotor nach Anspruch 19, **dadurch gekennzeichnet, dass** eine Medienleitung (8) für Licht durch den Elektromotor (1) und den Schlauch (13) verläuft, wobei eine Lichtquelle in der Antriebs- und Steuereinheit vorgesehen ist.

21. Elektromotor nach einem der Ansprüche 19 oder 20, **dadurch gekennzeichnet, dass** die größte Länge des Schlauchs einschließlich Elektromotor, beginnend bei einer Kupplung (12) zum Einkuppeln dentaler Instrumente (2) bis zum Beginn der Antriebs- und Steuereinheit (14), zwischen 1 m und 3 m beträgt.

22. Dentalwerkzeug, enthaltend einen Elektromotor nach einem der vorhergehenden Patentansprüche sowie ein davon angetriebenes dentales Instrument.

## Claims

1. Electric motor (1) for the drive of a dental or medical instrument (2), with a rotor magnet (4) mounted on a shaft (3), a stator (5) and media conduits (6, 7, 8) for supplying media to the dental instrument, **characterised in that** a Gramme stator winding (9) is provided, media conduits (6, 7, 8) running, at least in regions, within the stator winding or between individual sections (9a, 9b) of the stator winding.

2. Electric motor according to Claim 1, **characterised in that** the electric motor (1) is a permanent-magnet synchronous motor.

3. Electric motor according to one of the preceding claims, **characterised in that** the electric motor (1) is a brushless d.c. motor.

4. Electric motor according to one of the preceding claims, **characterised in that** the sections (9a, 9b) of the stator winding (9) in each case constitute individual coils.

5. Electric motor according to Claim 4, **characterised in that** six individual coils (9a, 9b) are provided, the respective diametrically opposite individual coils being connected to one another in each case to form a coil pair and being switched to one phase.

6. Electric motor according to one of Claim 4 and 5, **characterised in that** the individual coils are wound in a multi-layered manner.

7. Electric motor according to one of Claims 4 to 6, **characterised in that** the individual coils are arranged in a non-overlapping manner.

8. Electric motor according to one of the preceding claims, **characterised in that** the stator (5) comprises a yoke ring (10) and/or **in that** this yoke ring is enclosed by a coil body of the stator.

9. Electric motor according to Claim 8, **characterised in that** the stator winding is wound around essentially annulus-segment-shaped sections of the yoke ring (10) and/or of the coil body (11) of the stator (5).

10. Electric motor according to one of Claim 8 and 9, **characterised in that** the yoke ring (10) is constructed of several layers of sheet-metal.

11. Electric motor according to one of the preceding claims, **characterised in that** the stator winding is filled out with plastic.

12. Electric motor according to one of the preceding claims, **characterised in that** the electric motor (1) comprises a coupling (12) for receiving a dental instrument (2) to be driven.

13. Electric motor according to one of Claims 8 to 12, **characterised in that** the yoke ring (10) is enclosed radially outwards and/or radially inwards by the coil body (11).

14. Electric motor according to one of the preceding claims, **characterised in that** radial protuberances of the coil body (11) are located between the sections (9a, 9b) of the stator winding.

15. Electric motor according to one of the preceding claims, **characterised in that** the media conduits (6, 7, 8) run essentially in the longitudinal direction of the shaft (3) through the coil body (11).

16. Electric motor according to one of the preceding claims, **characterised in that** the media conduits (6, 7, 8) are conduits for leading through light, water, electricity and/or air, in particular compressed air.

17. Electric motor according to one of the preceding claims, **characterised in that** the ratio of the size extent of the stator (5) radially to the shaft (3), to the greatest extent of the stator (5) in the direction of the shaft (3), is between 0.8 and 5, preferably between 1 and 3, particularly preferably between 1.2 and 1.6.

18. Electric motor according to one of the preceding claims, **characterised in that** the ratio of the greatest extent of the stator (5) radially to the shaft (3), to the greatest length of the rotor magnet (4) in the shaft direction, is between 1 and 6, preferably between 1.1 and 2, particularly preferably between 1.6 and 1.8.

19. Electric motor according to one of the preceding claims, **characterised in that** it is connected to a flexible tubing in a coupling-free manner, the flexible tubing at the end which is distant to the electric motor (1) comprising a drive and control unit (14) for supplying and regulating media.

20. Electric motor according to Claim 19, **characterised in that** a media conduit (8) for light runs through the electric motor (1) and the flexible tubing (13), a light source being provided in the drive and control unit.

21. Electric motor according to one of Claim 19 and 20, **characterised in that** the greatest length of the flexible tubing including the electric motor, starting at a coupling (12) for coupling dental instruments (2), up to the beginning of the drive and control unit (14), is between 1 m and 3 m.

22. Dental tool, comprising an electric motor according to one of the preceding claims and a dental instrument driven thereby.

## Revendications

1. Moteur électrique (1) pour l'entraînement d'un instrument dentaire ou bien médical (2), comportant un aimant rotorique (4) placé sur un arbre (3) ainsi qu'un stator (5) et des conduites de fluide (6, 7, 8) pour le transport de fluides vers l'instrument dentaire,
**caractérisé en ce qu'**est prévu un enroulement statorique en anneau Gramme (9), moyennant quoi les conduites de fluide passent à l'intérieur de l'enroulement statorique, ou bien entre différentes sections de celui-ci (9a, 9b), au moins par endroits.

2. Moteur électrique (1) selon la revendication 1, **caractérisé en ce que** le moteur électrique est un moteur synchrone à aimants permanents.

3. Moteur électrique selon l'une des revendications précédentes **caractérisé en ce que** le moteur électrique est un moteur à courant continu sans balais.

4. Moteur électrique selon l'une des revendications précédentes, **caractérisé en ce que** les sections (9a, 9b) de l'enroulement statorique constituent chacune une bobine séparée.

5. Moteur électrique selon la revendication 4, **caractérisé en ce que** six bobines séparées (9a, 9b) sont prévues, où les bobines singulières diamétralement opposées sont connectées pour former une paire, et sont branchées à une même phase.

6. Moteur électrique selon les revendications 4 ou 5, **caractérisé en ce que** les bobines singulières sont constituées d'enroulements à plusieurs couches.

7. Moteur électrique selon les revendications 4 à 6, **caractérisé en ce que** les bobines singulières ne se chevauchent pas.

8. Moteur électrique selon l'une des revendications précédentes, **caractérisé en ce que** le stator (5) comprend une bague de retour de flux (10), et/ou que cette bague de retour de flux est entourée par un corps de bobine du stator.

9. Moteur électrique selon la revendication 8, **caractérisé en ce que** les enroulements statoriques sont bobinés autour de sections de la bague de retour de flux (10) pour l'essentiel en forme de segments de couronne, et/ou autour du corps de bobine (11) du stator (5).

10. Moteur électrique selon les revendications 8 ou 9, **caractérisé en ce que** la bague de retour de flux (10) est constituée de plusieurs couches de tôle métallique.

11. Moteur électrique selon l'une des revendications précédentes, **caractérisé en ce que** l'enroulement statorique est rempli de matière plastique.

12. Moteur électrique selon l'une des revendications précédentes, **caractérisé en ce que** le moteur électrique (1) présente un couplage (12) destiné à accueillir un instrument dentaire à actionner.

13. Moteur électrique selon l'une des revendications 8 à 12, **caractérisé en ce que** la bague de retour de flux (10) est entourée radialement du côté intérieur et/ou du côté extérieur par le corps de bobine.

14. Moteur électrique selon l'une des revendications précédentes, **caractérisé en ce que** des rehaussements radiaux du corps de bobine (11) se trouvent entre les sections (9a, 9b) de l'enroulement statorique.

15. Moteur électrique selon l'une des revendications précédentes, **caractérisé en ce que** les conduites de fluide (6, 7, 8) courent à travers le corps de bobine (11) pour l'essentiel dans la direction de l'arbre (3).

16. Moteur électrique selon l'une des revendications précédentes, **caractérisé en ce que** les conduites de fluide (6, 7, 8) sont destinées au transport de lumière, d'eau, d'électricité et/ou d'air, en particulier d'air sous pression, etc.

17. Moteur électrique selon l'une des revendications précédentes, **caractérisé en ce que** le rapport de l'extension radiale maximale du stator (5) à partir de l'arbre (3) à l'extension maximale du stator (5) dans la direction de l'arbre (3) a une valeur comprise entre 0,8 et 5, préférentiellement entre 1 et 3, et plus préférentiellement encore entre 1,2 et 1,6.

18. Moteur électrique selon l'une des revendications précédentes, **caractérisé en ce que** le rapport de l'extension radiale maximale du stator (5) à partir de l'arbre (3) à la longueur maximale de l'aimant du rotor (4) dans la direction de l'arbre a une valeur comprise entre 1 et 6, préférentiellement entre 1,1 et 2, et plus préférentiellement encore entre 1,6 et 1,8.

19. Moteur électrique selon l'une des revendications précédentes, **caractérisé en ce qu'**il est raccordé sans couplage à un tuyau, moyennant quoi le tuyau présente à son extrémité opposée au moteur électrique une unité d'entraînement et de contrôle destinée à l'approvisionnement en fluides et à leur régulation.

20. Moteur électrique selon la revendication 19, **caractérisé en ce qu'**une conduite (8) pour la lumière court à travers le moteur électrique (1) et le tuyau (13), moyennant quoi est prévue une source de lumière dans l'unité d'entraînement et de contrôle.

21. Moteur électrique selon l'une des revendications 19 ou 20, **caractérisé en ce que** la plus grande longueur du tuyau, moteur électrique compris, sera comprise entre 1 et 3 mètres, depuis un couplage (12) destiné au raccord d'instruments dentaires (2) jusqu'au début de l'unité d'entraînement et de contrôle (14).

22. Outil dentaire, comprenant un moteur électrique selon l'une des revendications précédentes, ainsi qu'un instrument dentaire mu par ce dernier.
